# EUROPÄISCHE PATENTANMELDUNG

(11) **EP 1 889 741 A1**
(43) Veröffentlichungstag der Anmeldung: **20.02.2008**
(21) Anmeldenummer: 07014957.0
(22) Anmeldetag: 31.07.2007
(51) Int. Cl.: B60J 11/00

(54) **Schutzhülle für ein Fahrzeug**

(30) Priorität: 16.08.2006 DE 202006012542 U
(71) Anmelder: Ivera H.-P. Rück Textilhandel u. -verarbeitung GmbH, 73230 Kirchheim/Teck (DE)
(72) Erfinder: Rück, Hans-Peter, 73230 Kirchheim/Teck (DE)
(74) Vertreter: Ruckh, Rainer Gerhard

(57) **Zusammenfassung**

Die Erfindung betrifft eine Schutzhülle für ein Fahrzeug, die aus einem flexiblen zumindest im ungebrauchten Zustand, in einer Ebene verlaufenden Flächengebilde (2) besteht. Am Rand des Flächengebildes (2) umlaufend ist eine bandförmige Struktur (3) als Beschwerung eingearbeitet.

## Beschreibung

Die Erfindung betrifft eine Schutzhülle für ein Fahrzeug.

Als Schutz zur Sonneneinstrahlung oder auch als Schutz vor einem Vereisen der Windschutzscheibe eines Automobils werden typischerweise kartonartige Schutzabdeckungen eingesetzt, die an der Windschutzscheibe des Automobils, beispielsweise durch Einklemmen an den Scheibenwischern, fixiert werden.

Nachteilig hierbei ist zum einen, dass derartige Schutzabdeckungen nur einen mangelhaften Halt am jeweiligen Kraftfahrzeug haben und sich dementsprechend, insbesondere bei Aufkommen von Wind, von der Windschutzscheibe ablösen können.

Weiterhin ist nachteilig, dass durch eine derartige Schutzabdeckung nur der Bereich der Windschutzscheibe geschützt ist. Um beispielsweise auch die Heckscheibe des Automobils zu schützen, muss dort eine separate Schutzabdeckung angebracht werden. Da an der Heckscheibe bei vielen Kraftfahrzeug-Typen kein Scheibenwischer vorhanden ist, müssen dort zur Fixierung zusätzliche Elemente vorgesehen werden. Oftmals stehen jedoch derartige Elemente nicht zur Verfügung.

Generell ist es auch insbesondere bei Motorrädern bekannt, diese mit aus Kunststoff oder dergleichen ausgebildeten Ummantellungen zu versehen. Diese Ummantellungen sind in ihrer Form an die Kontur des jeweiligen Kraftfahrzeugs angepasst. Abgesehen davon, dass derartige Ummantellungen teuer sind, ist auch deren Anbringung zeitaufwendig. Zudem ist eine derartige Ummantelung nur für einen spezifischen Kraftfahrzeug-Typ einsetzbar.

Der Erfindung liegt die Aufgabe zugrunde, eine Schutzhülle der eingangs genannten Art bereitzustellen, welche kostengünstig herstellbar und universell für unterschiedliche Typen von Kraftfahrzeugen einsetzbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Schutzhülle für ein Fahrzeug besteht aus einem flexiblen, in einer Ebene verlaufenden Flächengebilde. Am Rand des Flächengebildes umlaufend ist eine bandförmige Struktur als Beschwerung eingearbeitet.

Die erfindungsgemäße Konstruktion der Schutzhülle ermöglicht einen universellen Einsatz dieser Schutzhülle an unterschiedlichen Typen von Fahrzeugen, insbesondere Kraftfahrzeugen, wobei mit dieser Schutzhülle im Sommer sowohl ein Schutz gegen Lichteinstrahlung als auch im Winter ein Schutz gegen das Zufrieren von Fensterscheiben insbesondere bei als Automobilen ausgebildeten Kraftfahrzeugen erzielt wird. Schließlich kann mit der erfindungsgemäßen Schutzhülle ein effizienter Schutz gegen Verschmutzungen von Kraftfahrzeugen erzielt werden.

Wesentlich bei der Konstruktion der erfindungsgemäßen Schutzhülle ist das Zusammenwirken der Geometrie des Flächengebildes, welches eine ebene Fläche bildet und bevorzugt eine rechteckförmige Kontur aufweist, mit der Randeinfassung dieses Flächengebildes in Form einer Beschwerung mit einem hohen Eigenwicht.

Dies ermöglicht einerseits breites Einsatzspektrum an unterschiedlichen Kraftfahrzeugen, und zwar sowohl an Automobilen wie auch an Motorrädern, als auch an Wasserfahrzeugen wie Booten und andererseits eine schnelle und einfache Montage, die auch von einer ungeübten Person alleine und ohne Hilfsmittel durchgeführt werden kann.

Bei Anbringen der Schutzhülle an einem als Automobil ausgebildeten Kraftfahrzeugs wird die Schutzhülle vom Dach her auf das Kraftfahrzeug aufgesetzt und dann über die Scheiben des Kraftfahrzeugs gezogen. Dabei unterstützt die randseitige Beschwerung der Schutzhülle diesen Vorgang, da die am Rand umlaufende bandförmige Struktur das Flächengebilde seitlich am Kraftfahrzeug nach unten zieht, wodurch auf einfache Weise eine gleichmäßige Abdeckung aller Scheiben des Kraftfahrzeugs mit der Schutzhülle erzielt wird. Besonders vorteilhaft ist die Größe der Schutzhülle so dimensioniert, dass diese Schutzhülle bei gängigen Kraftfahrzeugen wie Limousinen, Vans, Geländewagen oder Kombis das Dach und den Bereich der Scheiben abdeckt und der untere Rand der Schutzhülle etwa auf der Höhe der Türschlösser verläuft. Prinzipiell sind auch größere Schutzhüllen zur Komplettabdeckung insbesondere von wertvollen Kraftfahrzeugen wie Oldtimern denkbar. Derartige Schutzhüllen können weiterhin ohne weitere Anpassung auch zum Schutz von Motorrädern eingesetzt werden. Auch ein Abdecken offener Innenräume von Cabriolets ist hiermit ohne weiteres möglich.

Ein wesentlicher Vorteil der erfindungsgemäßen Schutzhülle besteht weiterhin darin, dass durch die am Rand des Flächengebildes umlaufende bandförmige Struktur als Beschwerung einen sicheren Halt der Schutzhülle am Kraftfahrzeug gewährleistet ist. Damit brauchen zur Fixierung der Schutzhülle am Kraftfahrzeug keinerlei Befestigungsmittel vorgesehen sein.

Um ein einfaches Aufbringen der Schutzhülle auf das Kraftfahrzeug zu gewährleisten und ein direktes Anliegen der Schutzhülle auf der Oberfläche zu gewährleisten, ist es wesentlich, dass das Flächengebilde eine hohe Flexibilität und Biegsamkeit aufweist.

Um dies zu erreichen, besteht das Flächengebilde besonders vorteilhaft aus textilem Material, insbesondere das einem Gewebe. Das Gewebe ist bevorzugt luftdurchlässig und gegebenenfalls auch wasserdurchlässig, damit gegebenenfalls Schwitzwasser, das sich im Bereich des Kraftfahrzeugs unterhalb der Schutzhülle sammelt, durch das Flächengebilde entweichen kann. Beispiele für derartige Textilien sind Produkte der Firma Sattler mit dem Produktnamen "covermaster premium".

Weiterhin kann das textile Flächengebilde bevorzugt aus Kunstfasern wie Polyester bestehen, um die notwendige mechanische und Witterungsstabilität der Schutzhülle zu gewährleisten. Insbesondere kann dabei das Flächengebilde zumindest teilweise aus schwer entflammbarem Trevira CS bestehen. Zur Erhöhung der Stabilität des Flächengebildes kann das Gewebe mit Glasfasern verstärkt sein.

Um einen effektiven Schutz gegen Verschmutzungen oder Vereisungen der Scheiben eines Kraftfahrzeugs zu gewährleisten, weist das Gewebe zur Ausbildung des Flächengebildes eine hinreichend engmaschige Struktur auf. Dies ist auch vorteilhaft, um einen effizienten Schutz des Kraftfahrzeugs gegen Lichteinstrahlung mit der Schutzhülle zu erzielen, so dass durch Aufbringen der Schutzhülle auf ein parkendes Automobil dessen Innenraum gegen unerwünschte Erwärmung geschützt wird.

Der Schutz gegen Lichteinstrahlung wird besonders vorteilhaft dadurch erhöht, dass das Flächengebilde der Schutzhöhe zumindest an seiner Außenseite, besonders vorteilhaft zusätzlich auch an der Innenseite eine lichtreflektierende Oberflächenschicht aufweist, wobei diese vorteilhaft aus Aluminium besteht. Zur Aufbringung der Oberflächenschicht können die einzelnen Fasern des Gewebes des Flächengebildes mit Aluminium beschichtet werden, so dass dann beide Seiten des Flächengebildes mit der lichtreflektierenden Oberflächenschicht versehen sind. Alternativ kann das Gewebe in Form des Flächengebildes mit Aluminium bedampft oder beschichtet werden. In diesem Fall können wahlweise eine oder beide Seiten des Flächengebildes mit einer lichtreflektierenden Schicht versehen werden.

Prinzipiell kann anstelle eines Gewebes auch eine Folie zur Ausbildung des Flächengebildes der Schutzhülle verwendet werden. Hierzu besteht die Folie bevorzugt aus Kunststoff. Dabei ist das Material und die Dicke der Folie so gewählt, dass diese eine hinreichende Biegsamkeit und Flexibilität aufweist. Auch in diesem Fall kann das Flächengebilde einseitig oder beidseitig eine lichtreflektierende Oberflächenschicht aufweisen, die bevorzugt wieder aus Aluminium besteht. Um eine gewisse Luftdurchlässigkeit der Folie zu erhalten, kann diese eine feine Perforation aufweisen. Auch in diesem Fall kann die Folie mit dem lichtreflektierenden Material beschichtet oder bedampft sein.

In einer besonders einfachen Ausgestaltung der Erfindung kann die bandförmige Struktur aus einem Metallband, insbesondere einem Bleiband bestehen, das in einem am Rand des Flächengebildes umlaufenden Saum eingearbeitet ist. Durch diesen Saum wird das Metall nicht nur im Flächengebilde lagefixiert. Gleichzeitig bildet der Saum eine dämpfende Schutzschicht, die einen direkten Kontakt des Metallbandes mit dem Kraftfahrzeug verhindert und dieses somit gegen Beschädigungen schützt.

Besonders vorteilhaft kann die bandförmige Struktur auch derart ausgebildet sein, dass in eine schlauchförmige Umhüllung, die vorzugsweise aus textilem Material besteht, metallische Segmente so eingebracht werden, dass diese in Längsrichtung der Umhüllung dicht hintereinander liegen. Diese Segmente können bandförmig oder auch massiv zylindrisch ausgebildet sein. Durch die einzelnen gegeneinander bewegbaren Segmente in der Umhüllung ist die so ausgebildete bandförmige Struktur formbar und kann so entlang des Randes des Flächengebildes angelegt und dann in einem Saum des Flächengebildes eingenäht werden. Durch die doppelte Ummantelung der Segmente mit der Umhüllung und dem Saum wird eine besonders wirksame Abdeckung der Segmente und damit ein guter Schutz gegen Beschädigungen des Kraftfahrzeugs erzielt.

Die so ausgebildete Umhüllung kann ein relativ hohes Eigengewicht aufweisen, wodurch ein guter Halt der Schutzhülle am jeweiligen Kraftfahrzeug gewährleistet wird.

Dieser Halt kann generell dadurch verbessert werden, wenn die Segmente zumindest teilweise aus magnetischem Material bestehen. Dadurch haften die Segmente durch wirkende Magnetkräfte an metallischen Teilen des Kraftfahrzeugs. Dasselbe gilt auch für eine bandförmige Struktur in Form eines durchgehenden Bandes.

Die Erfindung wird im Nachstehenden anhand der Zeichnungen dargestellt. Es zeigen:
- Figur 1:: Draufsicht auf ein Ausführungsbeispiel einer Schutzhülle für ein Kraftfahrzeug.
- Figur 2:: Längsschnitt durch einen Ausschnitt einer bandförmigen Struktur für die Schutzhülle gemäß Figur 1.
- Figur 3:: Querschnitt durch die bandförmige Struktur gemäß Figur 2.
- Figur 4:: Schutzhülle gemäß Figur 1 an einem Kraftfahrzeug.

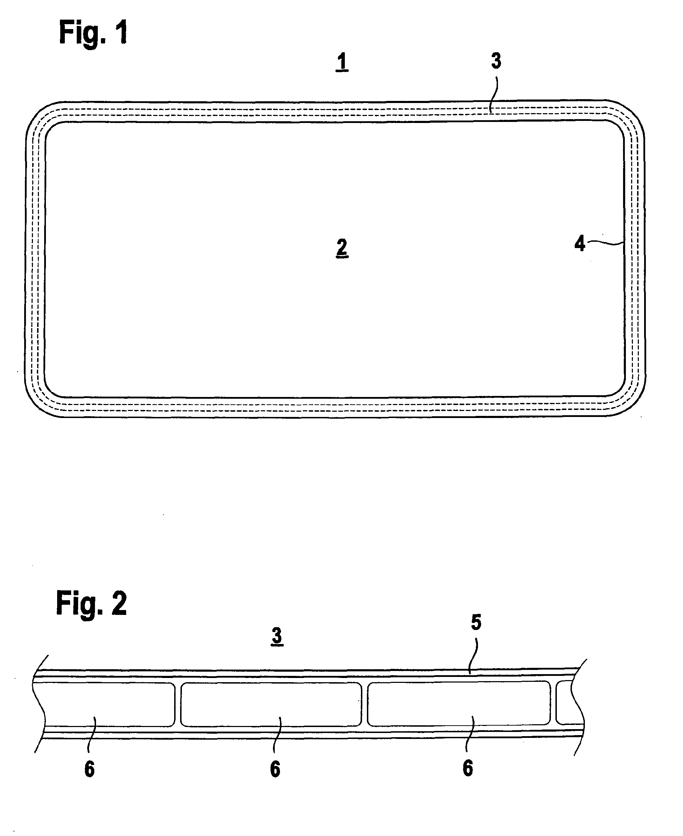

Figur 1 zeigt schematisch eine Schutzhülle 1 die zur Abdeckung eines Kraftfahrzeugs, insbesondere eines Automobils oder eines Motorrads dient.

Die Schutzhülle 1 besteht aus einem in einer Ebene verlaufenden, im Wesentlichen rechteckförmigen Flächengebilde 2, welches im vorliegenden Fall von einer textilen Fläche gebildet ist. Das Flächengebilde 2 ist an den Ecken etwas abgerundet. Am Rand des Flächengebildes 2 umlaufend ist eine bandförmige Struktur 3 als Beschwerung fixiert. Hierzu ist die bandförmige Struktur 3 in einen am gesamten Rand des Flächengebildes 2 umlaufenden Saum 4 eingenäht.

Das das Flächengebilde 2 bildende Gewebe besteht im vorliegenden Fall aus Kunstfasern, insbesondere Polyester und einer lichtreflektierenden Oberflächenbeschichtung aus Aluminium.

Die Dichte des Gewebes ist hinreichend groß, so dass das Flächengebilde 2 einen Schutz gegen Lichteinwirkung und Verschmutzungen bildet.

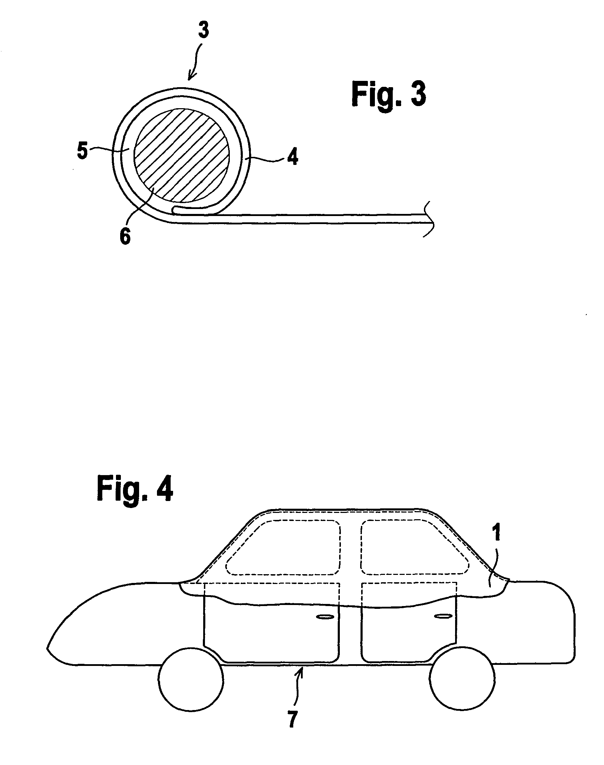

Die am Rand des Flächengebildes 2 umlaufende bandförmige Struktur 3 bildet eine randseitige Beschwerung der Schutzhülle 1. Der Aufbau der bandförmigen Struktur 3 ist in Figur 2 dargestellt. Figur 3 zeigt einen Querschnitt dieser bandförmigen Struktur 3 im Saum 4 des Flächengebildes 2 liegend.

Die bandförmige Struktur 3 weist eine langgestreckte schlauchförmige Umhüllung 5 auf, in welcher als Beschwerung metallische Segmente 6 gelagert sind. Die schlauchförmige Umhüllung 5 besteht aus textilem Material, beispielsweise aus einem Gewebe. Der Durchmesser der Umhüllung 5 ist über deren gesamte Länge konstant. In der Umhüllung 5 sind die metallischen Segmente 6 in Längsrichtung der Umhüllung 5 hintereinander angeordnet. Die Segmente 6 sind besonders vorteilhaft identisch ausgebildet und weisen im vorliegenden Fall eine kreiszylindrische Form auf. Der Querschnitt der Umhüllung 5 ist an die Durchmesser der Segmente 6 angepasst, so dass diese mit geringem Spiel in der Umhüllung 5 gelagert sind. Die Segmente 6 bestehen im vorliegenden Fall aus Blei.

Die so ausgebildete bandförmige Struktur 3 ist, wie aus Figur 3 ersichtlich, im Saum 4 des Flächengebildes 2 eingenäht und so am Flächengebilde 2 fixiert.

Die Schutzhülle 1 gemäß Figur 1 kann auf Kraftfahrzeugen unterschiedlichen Typs aufgebracht werden. Figur 4 zeigt ein Beispiel, bei welchem die Schutzhülle 1 auf eine Limousine aufgebracht ist. Wie aus Figur 4 ersichtlich, deckt die Schutzhülle 1 das Dach und sämtliche Fensterscheiben der Limousine ab und schützt diese gegen Verschmutzungen und Vereisung im Winter. Zudem bildet die Schutzhülle 1 einen Lichtschutz und verhindert so ein unerwünschtes Aufheizen des Innenraums der Limousine. Wie aus Figur 4 ersichtlich, liegt der untere Rand der auf die Limousine aufgebrachten Schutzhülle 1 im Bereich der Türgriffe. Durch die als Beschwerung wirkende bandförmige Struktur 3, die am Rand der Schutzhülle 1 umläuft, ist die Schutzhülle 1 ohne weitere Befestigungsmittel gegen ein Ablösen vom Kraftfahrzeug gesichert.

### Bezugszeichenliste

(1) Schutzhülle
(2) Flächengebilde
(3) Struktur
(4) Saum
(5) Umhüllung
(6) Segment

## Patentansprüche

1. Schutzhülle für ein Fahrzeug bestehend aus einem flexiblen, in einer Ebene verlaufenden Flächengebilde (2), an dessen Rand umlaufend eine bandförmige Struktur (3) als Beschwerung eingearbeitet ist.

2. Schutzhülle nach Anspruch 1, **dadurch gekennzeichnet, dass** das Flächengebilde (2) eine luftdurchlässige Struktur (3) aufweist.

3. Schutzhülle nach Anspruch 2, **dadurch gekennzeichnet, dass** die luftdurchlässige Struktur (3) wasserdampfdurchlässig ist.

4. Schutzhülle nach einem der Ansprüche 1 bis 3, **dadurch gekennzeichnet, dass** das Flächengebilde (2) eine lichtreflektierende Oberflächenschicht aufweist, welche insbesondere aus Aluminium besteht.

5. Schutzhülle nach einem der Ansprüche 1 bis 4, **dadurch gekennzeichnet, dass** diese aus einem textilen Flächengebilde (2), insbesondere einem Gewebe besteht.

6. Schutzhülle nach Anspruche 5, **dadurch gekennzeichnet, dass** das textile Flächengebilde (2) zumindest teilweise aus Kunstfasern, insbesondere aus Polyester oder schwer entflammbarem Trevira CS besteht.

7. Schutzhülle nach einem der Ansprüche 5 oder 6, **dadurch gekennzeichnet, dass** das textile Flächengebilde (2) mit Glasfasern verstärkt ist.

8. Schutzhülle nach einem der Ansprüche 5 bis 7, **dadurch gekennzeichnet, dass** die Fasern des textilen Flächengebildes (2) zur Ausbildung der lichtreflektierenden Oberflächenschicht mit lichtreflektierendern Material beschichtet oder bedampft sind.

9. Schutzhülle nach einem der Ansprüche 5 bis 7, **dadurch gekennzeichnet, dass** das textile Flächengebilde (2) zur Ausbildung der lichtreflektierenden Oberflächenschicht mit lichtreflektierendern Material beschichtet oder bedampft ist.

10. Schutzhülle nach einem der Ansprüche 1 bis 9, **dadurch gekennzeichnet, dass** das Flächengebilde (2) von einer Folie gebildet ist, welche insbesondere aus Kunststoff besteht.

11. Schutzhülle nach Anspruch 10, **dadurch gekennzeichnet, dass** die Folie perforiert ist.

12. Schutzhülle nach einem der Ansprüche 10 oder 11, **dadurch gekennzeichnet, dass** die Folie zur Ausbildung der lichtreflektierenden Oberflächenschicht mit lichtreflektierendern Material beschichtet oder bedampft ist.

13. Schutzhülle nach einem der Ansprüche 1 bis 12, **dadurch gekennzeichnet, dass** die bandförmige Struktur (3) als Band ausgebildet ist, das in einen Saum (4) am Rand des Flächengebildes (2) eingearbeitet ist.

14. Schutzhülle nach einem der Ansprüche 1 bis 13, **dadurch gekennzeichnet, dass** die bandförmige Struktur (3) von einer schlauchförmigen Umhüllung (5) gebildet ist, in welcher stangenförmige oder bandförmige Segmente (6) aus massivem Material als Beschwerung in Längsrichtung der schlauchförmigen Umhüllung (5) hintereinander angeordnet sind.

15. Schutzhülle nach Anspruch 14, **dadurch gekennzeichnet, dass** die Umhüllung (5) in einen Saum (4) am Rand des Flächengebildes (2) eingearbeitet ist.

16. Schutzhülle nach einem der Ansprüche 13 bis 15, **dadurch gekennzeichnet, dass** die Umhüllung (5) aus textilem Material besteht.

17. Schutzhülle nach einem der Ansprüche 13 bis 16, **dadurch gekennzeichnet, dass** das Band oder die in der Umhüllung (5) gelagerten Segmente (6) aus Metall und/oder aus magnetischem Material bestehen.

18. Schutzhülle nach Anspruch 17, **dadurch gekennzeichnet, dass** das Band oder die in der Umhüllung (5) gelagerten Segmente (6) aus Blei bestehen.

19. Schutzhülle nach einem der Ansprüche 1 bis 18, **dadurch gekennzeichnet, dass** das Flächengebilde (2) rechteckförmig ist.

20. Schutzhülle nach Anspruch 19, **dadurch gekennzeichnet, dass** die bandförmige Struktur (3) entlang des gesamten Umfangs des Flächengebildes (2) umläuft.
